# EUROPEAN PATENT SPECIFICATION

(11) **EP 2 768 111 B1**
(45) Date of publication and mention of the grant of the patent: **21.06.2017**
(21) Application number: 14160618.6
(22) Date of filing: 18.07.2007
(51) Int. Cl.: H02J 7/00, A47L 9/28

(54) **Method for charging service robot**
Verfahren zum Aufladen des Dienst-Roboters
Procédé pour charger un robot de service

(30) Priority: 06.12.2006 KR 20060123050
(43) Date of publication of application: 20.08.2014
(62) Divisional of application: 07290899.9
(73) Proprietor: Samsung Electronics Co., Ltd., Suwon-si Gyeonggi-do 443-742 (KR)
(72) Inventor: Ko, Jang-youn, Gwangju-city (KR); Jeung, Sam-jong, Gwangju-city (KR); Song, Jeong-gon, Gwangju-city (KR); Kim, Myeong-ho, Gwangju-city (KR); Lee, Ju-sang, Gwangju-city (KR); Kim, Kyoung-woung, Gwangju-city (KR); Lee, Hak-bong, Gwangju-city (KR)
(74) Representative: Grünecker Patent- und Rechtsanwälte PartG mbB

(56) References cited:
- EP-A2- 1 457 151
- US-A1- 2005 156 562
- US-A1- 2006 190 133

## Description

### BACKGROUND OF THE INVENTION

### 1. Field of the Invention

The present invention relates to a service robot, and more particularly, to a method for charging a service robot for a vacuum cleaner.

### 2. Description of the Related Art

Generally, service robots are designed to assist people by moving around automatically without user manipulation, and cleaning a surface by drawing in foreign materials such as dust.

Service robots have a distance sensor or a photographing unit, which confirms the presence or absence of obstacles, or the distance of objects such as devices, office equipment or walls in a given area, in order to be able to clean without undesirable collisions or obstruction. An exemplary service robot may include a left driving wheel, a right driving wheel, and a driven wheel, all on the lower part of a cleaner body. Each of the driving wheels is driven in association with a driving motor. The driving motor is controlled by a controller, enabling the cleaner body to change directions.

The robot may have a suction port on a lower part of the body, to draw in foreign substances such as dust from a surface being cleaned. The suction port is subject to a suction force which is generated from a suction motor additionally provided to the cleaner body. The suction port is fluidly connected with a dust-collecting chamber which is provided inside the cleaner body. The in-drawn foreign material is collected and stored in the dust-collecting chamber.

The controller of the service robot checks the battery capacity to determine whether a power source is sufficient for driving the robot. If the controller determines that the battery should be charged, the service robot may communicate with a charging apparatus located at a predetermined position to find and move toward the position of the charging apparatus. A connecting terminal on the service robot may then be connected to a charging terminal on the charging apparatus. In other words, if the charging terminal and connecting terminal are connected to each other, the controller may be in charge mode until the battery power source becomes fully charged. During charging, other operations of the service robot may be halted. For example, the driving mode of the driving wheels and the cleaning mode may be disabled during charging.

When the charging terminal on the charging apparatus loses contact with the connecting terminal on the service robot during charging due to an earthquake, a strong shock on the floor surface, or unintentional contact with a user, or when the power source is interrupted due to power failure during charging or connecting terminals are in contact with each other, the service robot may automatically detect an inductive signal output from the charging apparatus and attempt to dock with the charging apparatus again.

However, when power failure occurs, the power source of the charging apparatus is interrupted or the charging apparatus is out of order, the charging apparatus can not output a charging apparatus recognition signal, so that the service robot can wander from place to place in order to locate the charging apparatus. As a result, the service robot may remain in a halted state because of the battery discharge.

US 2006/0190133 (A1) refers to an autonomous surface cleaning robot for wet cleaning. An autonomous floor cleaning robot includes a transport drive and control system arranged for autonomous movement of the robot over a floor for performing cleaning operations. The robot chassis carries a first cleaning zone comprising cleaning elements arranged to suction loose particulates up from the cleaning surface and a second cleaning zone comprising cleaning elements arraigned to apply a cleaning fluid onto the surface and to thereafter collect the cleaning fluid up from the surface after it has been used to clean the surface. The robot chassis carries a supply of cleaning fluid and a waste container for storing waste materials collected up from the cleaning surface.

### SUMMARY OF THE INVENTION

It is the object of the present invention to provide a method and apparatus for charging a service robot.

This object is solved by the subject matter of the independent claims.

There is provided a method for charging a service robot, which prevents the service robot from returning to a charging mode when supply of electricity fails, the power source of a charging apparatus is blocked or a user intentionally interrupts the charging process.

According to an aspect of the present invention not claimed, there is provided a method for charging a service robot, the method comprising: (a) docking an input terminal of the service robot with an output terminal of a charging apparatus , if an available battery power source falls below a predetermined level; (b) checking whether a predetermined charging voltage is input to the input terminal of the service robot; (c) determining whether power failure has occurred or the charging apparatus is out of order, if the charging voltage is not input in step (b); and (d) interrupting charging of the battery, if it is determined that power failure has occurred or the charging apparatus is out of order.

Step (c) may comprise determining that power failure has occurred or the charging apparatus is out of order, if an inductive signal is not output from the charging apparatus.

Step (c) may further comprise returning to step (a), if the inductive signal is output from the charging apparatus.

Step (c) may comprise (c-1) moving the service robot forward toward the output terminal using a predetermined pressing force; and (c-2) determining that power failure has occurred or the charging apparatus is out of order, if the charging voltage is not input to the input terminal.

Step (c-1) may be repeated twice or more.

Step (c-2) may further comprise returning to step (b), if the charging voltage is input to the input terminal.

According to another aspect of the prevent invention, there is provided a method for charging a service robot, the method comprising (a) docking an input terminal of the service robot with an output terminal of a charging apparatus, if an available battery power source falls below a predetermined level; (b) checking whether a predetermined charging voltage is input to the input terminal of the service robot; (c) determining whether a user has lifted the service robot from the ground, if the predetermined voltage is not input in step (b); and (d) interrupting charging of the battery if it is determined that a user has lifted the service robot from the ground, and returning to step (a) if it is determined that a user has not lifted the service robot from the ground.

Step (c) may comprise determining that a distance between the service robot and the floor surface exceeds a predetermined distance, using a floor detection sensor placed on the service robot.

### BRIEF DESCRIPTION OF THE DRAWINGS

The above and/or other aspects of the present invention will be more apparent by describing certain exemplary embodiments of the present invention with reference to the accompanying drawings, in which:
FIG. 1 is a perspective view illustrating a service robot for explanation of a method for charging a service robot according to an exemplary embodiment of the present invention;
FIG. 2 is a block diagram illustrating a charging apparatus and the service robot of FIG. 1;
FIG. 3 is a schematic side view of a service robot for explanation of the charging state of the service robot illustrated in FIG. 1;
FIG. 4 is a flowchart explaining a method for charging a service robot;
FIG. 5 is a flowchart explaining a method for charging a service robot;
FIG. 6 is a flowchart explaining a method for charging a service robot according to an exemplary embodiment of the present invention; and
FIG. 7 is a schematic side view illustrating the state in which a service robot is lifted from the ground.

### DETAILED DESCRIPTION OF THE EXEMPLARY EMBODIMENTS

Certain exemplary embodiments of the present invention will now be described in greater detail with reference to the accompanying drawings.

In the following description, same drawing reference numerals are used for the same elements even in different drawings. The matters defined in the description, such as detailed construction and elements, are provided to assist in a comprehensive understanding of the invention. Thus, it is apparent that the present invention can be carried out without those specifically defined matters. Also, well-known functions or constructions are not described in detail since they would obscure the invention with unnecessary detail.

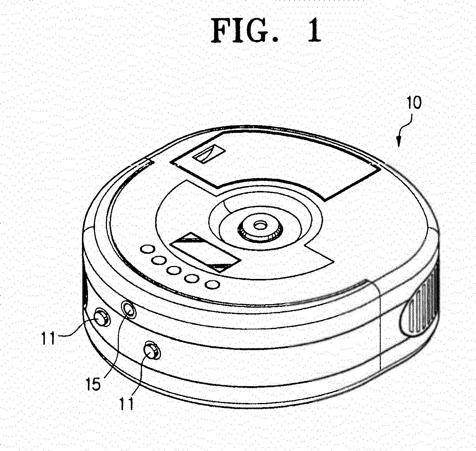

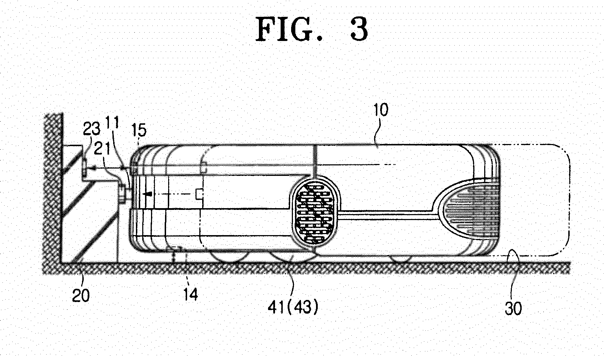

A service robot 10 and a charging apparatus 20 will be described with reference to FIGS. 1 and 3.

FIG. 1 shows the exterior of the service robot. In FIG. 1, the service robot 10 includes connecting terminals 11 corresponding to a charging terminal 21 of the charging apparatus 20 (referring to FIG. 3). A pair of connecting terminals 11 are exposed externally.

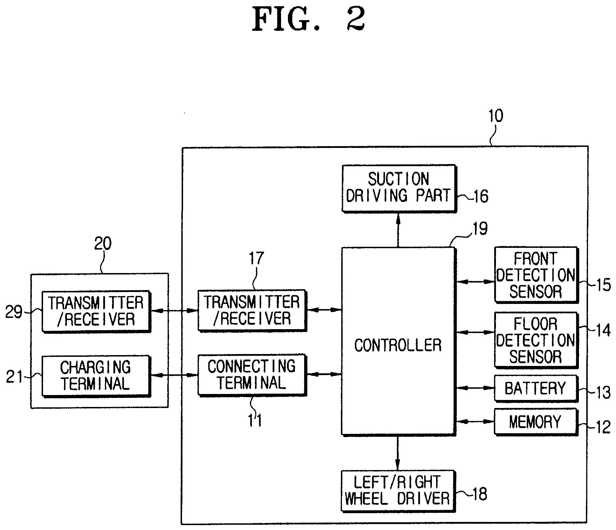

FIG. 2 is a block diagram of the service robot of FIG. 1. As shown in FIG. 2, the service robot 10 includes a memory 12, a battery 13, a floor detection sensor 14, a front detection sensor 15, a suction driving part 16, a transmitter/receiver 17, a left/right wheel driver 18, and a controller 19. The memory 12 stores various data on such things as cleaning times, areas to be cleaned, cleaning routines, or other information. This data is useful for the controller 19 to control the service robot 10 automatically.

The battery 13 provides a driving power source and a certain amount of power source in reserve. Accordingly, the controller 19 frequently checks the capacity of the battery 13 to determine whether the battery 13 should be charged, and to control such that a preset charging mode is used.

The floor detection sensor 14 is provided on a lower part of the service robot 10 and may be configured to face a floor surface 30 (referring to FIG. 3). The floor detection sensor 14 may measure the distance from the floor surface 30, and may be a light emitting and receiving sensor.

The front detection sensor 15 is provided at a side of the service robot 10, and may be installed on the front of the service robot 10 in which the connecting terminals 11 are located. The front detection sensor 15 is used for detecting an obstacle or walls placed in front of or in a traveling direction of the service robot 10, and measuring the distance to the obstacle or walls. The front detection sensor 15 may be a light emitting and receiving sensor.

Signals detected in the sensors 14 and 15 as described above are transmitted to the controller 19. The controller 19 compares the received signals to reference data stored in the memory 12 to obtain information on the state and the position of the service robot 10, and then controls the service robot 10 using the obtained information.

The suction driving part 16 provides a suction force for cleaning the floor surface 30 of the area to be cleaned. Additionally, the suction driving part 16 may include a dust collecting motor.

The transmitter/receiver 17 may be used in order to locate the charging apparatus 20 by communicating with a transmitter/receiver 29 provided on the charging apparatus 20. Additionally, the transmitter/receiver 17 may transmit and/or receive signals to and/or from a remote controller operated by a user. Accordingly, the service robot 10 can be remotely controlled.

The left/right wheel driver 18 selectively drives left and right driving wheels 41 and 43 installed on the lower part of the service robot 10 under the control of the controller 19. The left/right wheel driver 18 may comprise stepping motors connected to the left and right driving wheels 41 and 43, respectively.

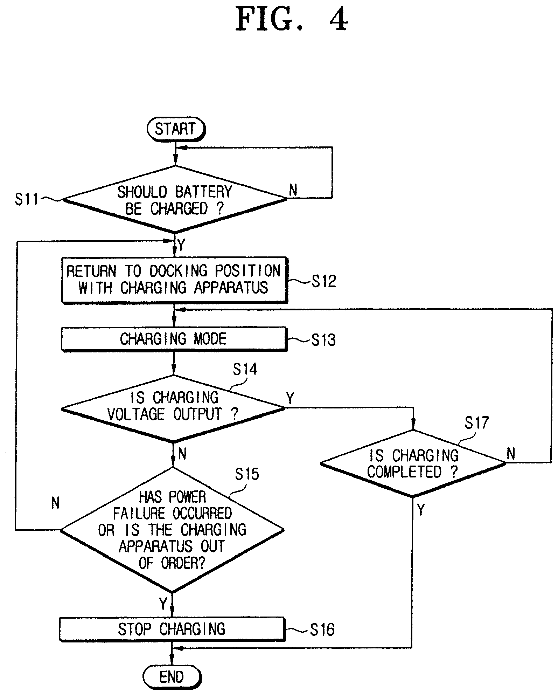

Hereinafter, a method for charging the service robot 10 constructed as described above will be described with reference to FIG. 4.

The controller 19 checks the power source capacity of the battery 13 whenever the service robot 10 travels or waits for cleaning, and determines whether the battery 13 should be charged (S11). If it is determined that the battery 13 should be charged, the controller 19 may return the service robot 10 to the docking position, as shown in FIG. 3 (S12). In operation S11, the service robot 10 may locate the charging apparatus 20 by signal exchange between the transmitter/receivers 17 and 29.

If the service robot 10 is returned to the docking position and the connecting terminals 11 are connected to the charging terminal 21, the charging mode may be performed to charge the battery (S13).

The controller 19 checks whether a predetermined charging voltage is applied to the connecting terminals 11 through the charging terminal 21 while charging the battery (S14). In the exemplary embodiment of the present invention, the charging voltage may be about 34V. If the charge voltage is applied, the controller 19 may determine whether charging is completed (S17). If charging is not completed, the process may return to operation S13, and if charging is completed, the service robot 10 may be driven to stop the charging.

If the charging voltage is not applied to the connecting terminal 11, the controller 19 may determine whether power failure has occurred or the charging apparatus is out of order (S15).

If it is determined that power failure has occurred or the charging apparatus is out of order, the controller 19 may stop the attempt to return to the charging state (S16).

Whether power failure has occurred or the charging apparatus is out of order may be determined according to the presence and absence of an inductive signal transmitted from the transmitter/receiver 29 of the charging apparatus 20.

In other words, if the inductive signal of the charging apparatus 20 is present, the controller 19 may determine that power failure does not occur or the charging apparatus is not out of order, and revert the service robot 10 to a docked state with the charging apparatus 20. If the inductive signal of the charging apparatus 20 is not present, the controller 19 may determine that the power failure occurs or the charging apparatus 20 is out of order, and interrupt the attempt to return the service robot 10 to the charging state (S16).

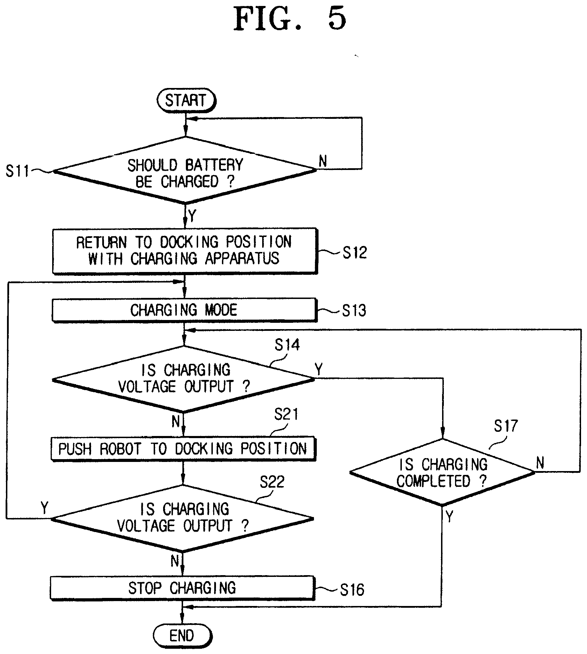

An alternative method for determining whether power failure has occurred or the charging apparatus is out of order is now described with reference to FIG. 5.

This method is provided taking into consideration the situation in which the body of the service robot is slightly twisted due to external shock, which may result in poor contact with the charging apparatus, and thus the predetermined charging voltage is not applied to the connecting terminals 11.

Specifically, the controller 19 pushes the service robot 10 to the front (S21), and then determines whether the charging voltage is input (S22). The front indicates the direction of the charging apparatus, or the direction of the input terminal without change in angles of the wheels. Above operations S21 and S22 may be repeated, for example, twice. If the charging voltage is not input, even through the operations are repeated, the controller 19 may determine that the charging apparatus is out of order, and stop the attempt to return to the charging state (S16). If the charging voltage is input, the process may return to operation S13.

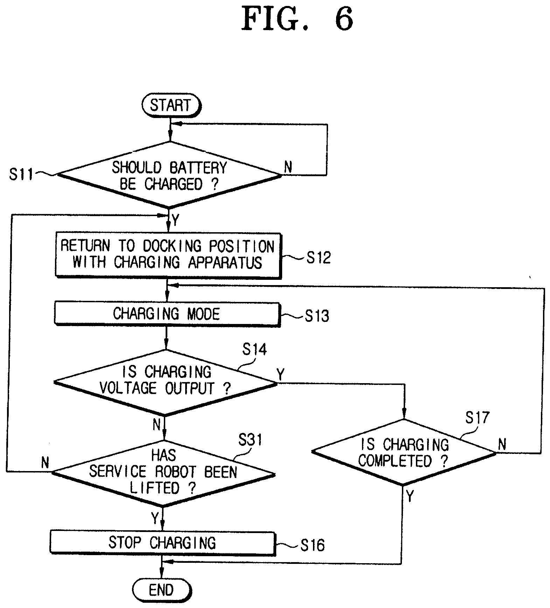

Hereinafter, a method for charging the service robot 10 constructed as described above, according to an exemplary embodiment of the present invention will be described with reference to FIG. 6.

Checking the battery capacity to determine whether the battery needs to be charged, returning the service robot 10 to the docking position to charge the battery, checking whether the predetermined charging voltage is input to the connecting terminals 11 during charging, are performed in the same manner as in above operations S11 to S 14 under the control of the controller 19.

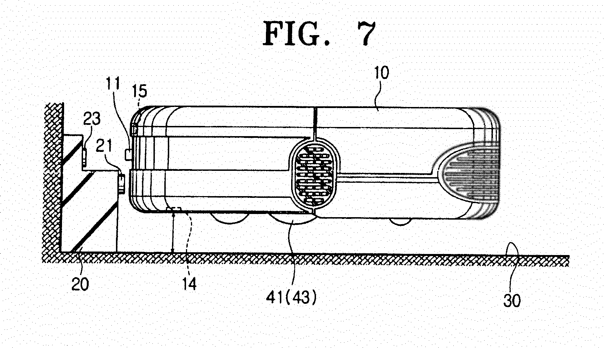

If a user lifts the service robot 10 from the ground, as shown in FIG. 7, the connection between the connecting and charging terminals may be released. Accordingly, the predetermined charging voltage is not applied to the connecting terminals 11. Whether the user has lifted the service robot 10 may be determined by measuring the distance between the service robot 10 and floor surface 30 using the floor detection sensor 14. In other words, if the distance exceeds a predetermined distance from the floor surface based on the location of the wheels of the service robot, it is determined that the user has lifted the service robot 10 (S31). Accordingly, the service robot regards that the user does not wish to charge the battery any more, and stops the attempt to return to the charging state (S16).

In the method for charging the service robot constructed as described above, according to the exemplary embodiments of the present invention it is possible to prevent the continuous attempt to return to the charging state, when power failure occurs, the power supply of the charging apparatus is blocked, or a user intentionally interrupts the charging. Therefore, the discharge of power source may be obstructed.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

### The following is a list of further preferred embodiments of the invention:

Embodiment 1: A method for charging a service robot, the method comprising:
   (a) docking an input terminal of the service robot with an output terminal of a charging apparatus, if an available battery power source falls below a predetermined level;
   (b) checking whether a predetermined charging voltage is input to the input terminal of the service robot;
   (c) determining whether power failure has occurred or the charging apparatus is out of order, if the charging voltage is not input in step (b); and
   (d) interrupting charging of the battery, if it is determined that power failure has occurred or the charging apparatus is out of order.
Embodiment 2: The method as claimed in embodiment 1, wherein step (c) comprises determining that power failure has occurred or the charging apparatus is out of order, if an inductive signal is not output from the charging apparatus.
Embodiment 3: The method as claimed in embodiment 2, wherein step (c) further comprises returning to step (a), if the inductive signal is output from the charging apparatus.
Embodiment 4: The method as claimed in embodiment 1, wherein step (c) comprises:
   (c-1) moving the service robot forward toward the output terminal using a predetermined pressing force; and
   (c-2) determining that power failure has occurred or the charging apparatus is out of order, if the charging voltage is not input to the input terminal.
Embodiment 5: The method as claimed in embodiment 4, wherein step (c-1) is repeated twice or more.
Embodiment 6: The method as claimed in embodiment 4, wherein step (c-2) further comprises returning to step (b) if the charging voltage is input to the input terminal.
Embodiment 7: A method for charging a service robot, the method comprising:
   (a) docking an input terminal of the service robot with an output terminal of a charging apparatus, if an available battery power source falls below a predetermined level;
   (b) checking whether a predetermined charging voltage is input to the input terminal of the service robot;
   (c) determining whether a user has lifted the service robot from the ground, if the predetermined voltage is not input in step (b); and
   (d) interrupting charging of the battery if it is determined that a user has lifted the service robot from the ground, and returning to step (a) if it is determined that a user has not lifted the service robot from the ground.
Embodiment 8: The method as claimed in embodiment 7, wherein step (c) comprises determining that a distance between the service robot and the floor surface exceeds a predetermined distance, using a floor detection sensor placed on the service robot.

## Claims

1. A method for charging a service robot having wheels, the method comprising:
(a) docking (S12) an input terminal (11) of the service robot (10) with an output terminal (21) of a charging apparatus (20) for charging a battery (13) of the service robot, if an available battery power source of the battery (13) falls below a predetermined level;
(b) checking (S14) whether a predetermined charging voltage from the charging apparatus (20) is input to the input terminal of the service robot;
(c) determining whether a user has lifted the service robot from the ground by measuring a distance between the service robot (10) and the floor surface (30) by a light emitting and receiving sensor (14), if the predetermined voltage is not input in step (b); and
(d) inhibiting a reattempt to dock the service robot for charging the battery, if the measured distance exceeds a predetermined distance based on the location of the wheels of the service robot, determining that a user has lifted the service robot from the ground, and returning to step (a), if it is determined that a user has not lifted the service robot from the ground,
wherein step (c) comprises determining (S31) that a distance between the service robot (10) and the floor surface exceeds a predetermined distance, using the light emitting and receiving sensor (14) placed on a lower part of the service robot to face a floor surface (30).

2. A service robot comprising:
a body including a suction driving part (16) to provide a suction force for cleaning a floor surface;
a battery (13) contained in the body;
an input terminal (11) coupled to the battery, the input terminal (11) disposed on the body for docking with an output terminal (21) of a charging apparatus (20) for charging of the battery;
a left/right wheel driver (18); and
a controller (19) configured to drive the left/right wheel driver (18) for docking the input terminal (11) of the service robot (10) with the output terminal (21) of the charging apparatus (20) for charging the battery (13),
wherein the controller (19) is further configured to inhibit reattempting to dock the service robot (10), after an initial attempt to dock the service robot to the charging apparatus (20) for charging the battery (13) by physically engaging with the charging apparatus (20), if it is determined (S14) that a charging voltage from the charging apparatus (20) is not being input to the input terminal and if it is determined that the service robot is lifted up from the floor surface by measuring a distance between the service robot (10) and the floor surface (30) by a light emitting and receiving sensor (14), and
further comprising the light emitting and receiving sensor (14) placed on a lower part of the service robot (10) to face a floor surface (30) for determining that the measured distance between the service robot (10) and the floor surface exceeds a predetermined distance based on the location of the wheels of the service robot.

## Patentansprüche

1. Verfahren zum Aufladen eines Diensteroboters mit Rädern, wobei das Verfahren umfasst:
(a) Koppeln (S12) eines Eingangsanschlusses (11) des Diensteroboters (10) mit einem Ausgangsanschluss (21) einer Ladevorrichtung (20) zum Aufladen einer Batterie (13) des Diensteroboters, falls eine verfügbare Batteriestromversorgung der Batterie (13) unter einen vorbestimmten Wert fällt;
(b) Überprüfen (S14), ob eine vorbestimmte Ladespannung aus der Ladevorrichtung (20) in den Eingangsanschluss des Diensteroboters eingegeben wird;
(c) Bestimmen, ob ein Benutzer den Diensteroboter von dem Boden angehoben hat, indem ein Abstand zwischen dem Diensteroboter (10) und der Bodenfläche (30) durch einen Licht emittierenden und empfangenden Sensor (14) gemessen wird, wenn die vorbestimmte Spannung nicht bei Schritt (b) eingegeben wird; und
(d) Verhindern eines erneuten Versuches den Diensteroboter zum Aufladen der Batterie zu koppeln, wenn der gemessene Abstand einen vorbestimmten Abstand auf der Grundlage der Lage der Räder des Diensteroboters übersteigt, Bestimmen, dass ein Benutzer den Diensteroboter vom Boden angehoben hat, und Zurückkehren zu Schritt (a), wenn festgestellt wird, dass ein Benutzer den Diensteroboter nicht vom Boden abgehoben hat,
wobei der Schritt (c) das Bestimmen (S31), dass ein Abstand zwischen dem Diensteroboter (10) und der Bodenfläche einen vorbestimmten Abstand übersteigt, mit Hilfe des Licht emittierenden und empfangenden Sensors (14) umfasst, der an einem unteren Teil des Diensteroboters angeordnet ist, um einer Bodenfläche (30) zugewandt zu sein.

2. Diensteroboter, umfassend:
einen Körper mit einem Saugantriebsteil (16), um eine Saugkraft zum Reinigen einer Bodenfläche bereitzustellen;
eine im Körper enthaltene Batterie (13);
einen mit der Batterie gekoppelten Eingangsanschluss (11), wobei der Eingangsanschluss (11) an dem Körper zum Koppeln mit einem Ausgangsanschluss (21) einer Ladevorrichtung (20) zum Aufladen der Batterie angebracht ist;
einen linken/rechten Radantrieb (18); und
eine Steuereinheit (19), die dazu eingerichtet ist, den linken/rechten Radantrieb (18) zum Koppeln des Eingangsanschlusses (11) des Diensteroboters (10) mit dem Ausgangsanschluss (21) der Ladevorrichtung (20) zum Aufladen der Batterie (13) anzutreiben,
wobei die Steuereinheit (19) ferner dazu eingerichtet ist, einen erneuten Versuch, den Diensteroboter (10) nach einem anfänglichen Versuch, den Diensteroboter mit der Ladevorrichtung (20) zum Aufladen der Batterie (13) durch physikalisches Eingreifen mit der Ladevorrichtung zu koppeln, zu unterbinden (20), wenn bestimmt wird (S14), dass eine Ladespannung aus der Ladevorrichtung (20) nicht in den Eingangsanschluss eingegeben wird, und wenn bestimmt wird, dass der Diensteroboter von der Bodenfläche angehoben ist, in dem ein Abstand zwischen dem Diensteroboter (10) und der Bodenfläche (30) durch einen Licht emittierenden und empfangenden Sensor (14) gemessen wird, und
weiterhin umfassend den an einem unteren Teil des Diensteroboters (10) angeordneten Licht emittierenden und empfangenden Sensor (14), der einer Bodenfläche (30) zugewandt ist, um basierend auf der Lage der Räder des Diensteroboters zu bestimmen, dass der gemessene Abstand zwischen dem Diensteroboter (10) und der Bodenfläche einen vorbestimmten Abstand übersteigt.

## Revendications

1. Procédé pour charger un robot d'entretien ayant des roues, le procédé comprenant:
(a) arrimer (S12) une borne d'entrée (11) du robot d'entretien (10) à une borne de sortie (21) d'un appareil de charge (20) pour charger une batterie (13) du robot d'entretien, si une source d'alimentation de batterie disponible de la batterie (13) tombe en dessous d'un niveau prédéterminé ;
(b) vérifier (S14) si une tension de charge prédéterminée en provenance de l'appareil de charge (20) est entrée dans la borne d'entrée du robot d'entretien ;
(c) déterminer si un utilisateur a soulevé le robot d'entretien du sol en mesurant une distance entre le robot d'entretien (10) et la surface du sol (30) par un capteur émetteur et récepteur de lumière (14), si la tension prédéterminée n'est pas entrée à l'étape (b) ; et
(d) inhiber une nouvelle tentative d'arrimer le robot d'entretien pour charger la batterie, si la distance mesurée dépasse une distance prédéterminée en fonction de l'emplacement des roues du robot d'entretien, déterminer qu'un utilisateur a soulevé le robot d'entretien du sol, et retourner à l'étape (a), s'il est déterminé qu'un utilisateur n'a pas soulevé le robot d'entretien du sol,
dans lequel l'étape (c) comprend la détermination (S31) qu'une distance entre le robot d'entretien (10) et la surface du sol dépasse une distance prédéterminée, en utilisant le capteur émetteur et récepteur de lumière (14) placé sur une partie inférieure du robot d'entretien pour faire face à une surface du sol (30).

2. Un robot d'entretien comprenant :
un corps incluant une partie d'entraînement d'aspiration (16) pour fournir une force d'aspiration pour nettoyer une surface de sol ;
une batterie (13) contenue dans le corps ;
une borne d'entrée (11) couplée à la batterie, la borne d'entrée (11) disposée sur le corps pour un arrimage avec une borne de sortie (21) d'un appareil de charge (20) pour charger la batterie ;
un dispositif d'entraînement de roue gauche / droite (18) ; et
un contrôleur (19) configuré pour entraîner le dispositif d'entraînement de roue gauche / droite (18) pour arrimer la borne d'entrée (11) du robot d'entretien (10) à la borne de sortie (21) de l'appareil de charge (20) pour charger la batterie (13),
dans lequel le contrôleur (19) est en outre configuré pour inhiber une nouvelle tentative d'arrimer le robot d'entretien (10), après une tentative initiale d'arrimer le robot d'entretien à l'appareil de charge (20) pour charger la batterie (13) en venant en prise physiquement avec la l'appareil de charge (20), s'il est déterminé (S14) qu'une tension de charge en provenance de l'appareil de charge (20) n'est pas entrée dans le terminal d'entrée et s'il est déterminé que le robot d'entretien est soulevé de la surface du sol en mesurant une distance entre le robot d'entretien (10) et la surface du sol (30) par un capteur émetteur et récepteur de lumière (14), et
comprenant en outre le capteur émetteur et récepteur de lumière (14) placé sur une partie inférieure du robot d'entretien (10) pour faire face à une surface du sol (30) pour déterminer que la distance mesurée entre le robot d'entretien (10) et la surface du sol dépasse une distance prédéterminée en fonction de l'emplacement des roues du robot d'entretien.
